# EUROPÄISCHE PATENTSCHRIFT

(11) **EP 1 312 292 B1**
(45) Veröffentlichungstag und Bekanntmachung des Hinweises auf die Patenterteilung: **28.04.2004**
(21) Anmeldenummer: 02405913.1
(22) Anmeldetag: 24.10.2002
(51) Int. Cl.: A47J 31/44

(54) **Anordnung zur Erzeugung von Milchschaum und zum Erhitzen von Milch**
Device for creating milk-froth and for heating milk
Dispositif de moussage de lait et de chauffage de lait

(30) Priorität: 14.11.2001 CH 20882001
(43) Veröffentlichungstag der Anmeldung: 21.05.2003
(73) Patentinhaber: Cafina AG, CH-5502 Hunzenschwil (CH)
(72) Erfinder: Imboden, David, 4616 Kappel (CH); Anliker, Markus, 7522 Gränichen (CH)
(74) Vertreter: Rottmann, Maximilian R.

(56) Entgegenhaltungen:
- EP-A- 0 326 929
- EP-A- 0 607 759
- EP-A- 0 803 220
- DE-U- 8 907 183
- US-A- 5 335 588
- US-A- 5 628 239
- US-B1- 6 289 796

## Beschreibung

Die Erfindung betrifft eine gemäss dem Oberbegriff des Anspruchs 1 ausgebildete Anordnung zur Erzeugung von Milchschaum und zum Erhitzen von Milch. Eine derartige Anordnung ist aus der DE 89 07 183 U bekannt.

Derartige Anordnungen kommen insbesondere in Espressomaschinen zum Einsatz. Dabei wird der Milchschaum in erster Linie für die Herstellung von Cappuccino verwendet, während die erhitzte Milch sowohl für die Zubereitung von Milchkaffee wie auch von heissen Milchgetränken genutzt werden kann.

Zur Erzeugung von Milchschaum ist eine Vielzahl sogenannter Emulgiereinrichtungen bekannt. Diese verfügen im allgemeinen über einen Dampfzufuhrkanal, der in eine Saugkammer mündet. Diese Saugkammer ist mit einem Milchzufuhrkanal und einem Luftzufuhrkanal verbunden. Durch den Dampfstrom wird in der Saugkammer ein Unterdruck erzeugt, welcher bewirkt, dass Milch über den Milchzufuhrkanal und Luft über den Luftzufuhrkanal in die Saugkammer gesaugt werden. Dieses Dampf-Luft-Milchgemisch wird in einer nachfolgenden Emulgierkammer in eine turbulente Strömung versetzt, so dass eine heisse Emulsion aus Milch und Luft entsteht.

Derartige Emulgiereinrichtungen sind beispielsweise aus der EP 0 195 750 sowie der EP 0 755 767 bekannt. Allerdings eignen sich derartige Emulgiereinrichtungen nicht zum Erhitzen von Milch, die für die Zubereitung von Milchkaffe wie auch von heissen Milchgetränken verwendet werden kann. Mit den genannten Emulgiereinrichtungen wird die Milch zwangsweise aufgeschäumt, was für die Herstellung von Milchkaffe oder heissen Milchgetränken unerwünscht ist. Zum Erhitzen von Milch weisen gattungsgemässe Kaffeemaschinen deshalb meistens einen separaten Dampfauslass mit einer endseitig daran angeordneten Dampfdüse aus. Dieser Dampfauslass wird direkt in das die zu erhitzende Milch enthaltende Gefäss eingetaucht, so dass der in das Gefäss einströmende Dampf die darin aufgenommene Milch erhitzt. Es versteht sich, dass diese Methode relativ umständlich ist und die aktuelle Temperatur der Milch vom Benutzer nur sehr schwer abgeschätzt werden kann, was dazu führt, dass die Milch meistens zu warm oder zu kalt ist. Ausserdem besteht bei einem externen Dampfauslass die Gefahr, dass sich der Benutzer daran Verbrennungen zuziehen kann. Schliesslich ist ein externer Dampfauslass nur sehr schwer zu reinigen, da sich insbesondere auf der Aussenseite der Auslassdüse Milch festsetzen kann. Nach dem Abstellen des Dampfs kann ggf. sogar Milch in die Auslassdüse hineingesaugt werden.

Es ist daher die Aufgabe der Erfindung, die im Oberbegriff des Anspruchs 1 definierte Anordnung zur Erzeugung von Milchschaum derart auszubilden, dass sie sich gleichzeitig auch zum kontrollierten Erhitzen von Milch eignet.

Diese Aufgabe wird durch die im Kennzeichen des Anspruchs 1 angeführten Merkmale gelöst.

Indem die Anordnung mit einem Mischelement versehen ist, das einen Zentralkanal aufweist, der einlassseitig mit der Einschnürung und stromabwärts davon mit dem Milcheinlasskanal verbunden ist, und bei dem zwischen der Einschnürung und dem Milcheinlasskanal ein zweiter Dampfeinlasskanal in den Hauptkanal mündet, können gleich zwei Vorteile erzielt werden. Zum einen kann durch einen zweiten Dampfeinlasskanal die für das Erhitzen der Milch zur Verfügung stehende Dampfmenge nachhaltig erhöht werden. Zum anderen wird durch die Anordnung des zweiten Dampfeinlasskanals, der zwischen der Einschnürung und dem Milcheinlasskanal in den Hauptkanal mündet, verhindert, dass die Milch aufgeschäumt wird, da der über den zweiten Dampfeinlasskanal zugeführte Dampf nicht mit Luft vermischt wird, welche ein Aufschäumen der Milch bewirken würde.

Bevorzugte Ausführungsbeispiele der Anordnung sind in den abhängigen Ansprüchen 2 bis 15 umschrieben.

Im Anspruch 16 wird zudem eine Espressokaffeemaschine vorgeschlagen, die mit einer erfindungsgemäss ausgebildeten Anordnung versehen ist. Schliesslich ist im Anspruch 17 ein Verfahren zum Erzeugen von Milchschaum und/oder zum Erhitzen von Milch beschrieben.

Nachfolgend werden Ausführungsbeispiele der Erfindung anhand von Zeichnungen näher erläutert. Darin zeigt:
Fig. 1 einen Querschnitt durch das Mischelement;
Fig. 2 eine schematische Darstellung der gesamten Anordnung zur Erzeugung von Milchschaum und zum Erhitzen von Milch, und
Fig. 3 einen Querschnitt durch ein alternatives Ausführungsbeispiel eines Mischelements.

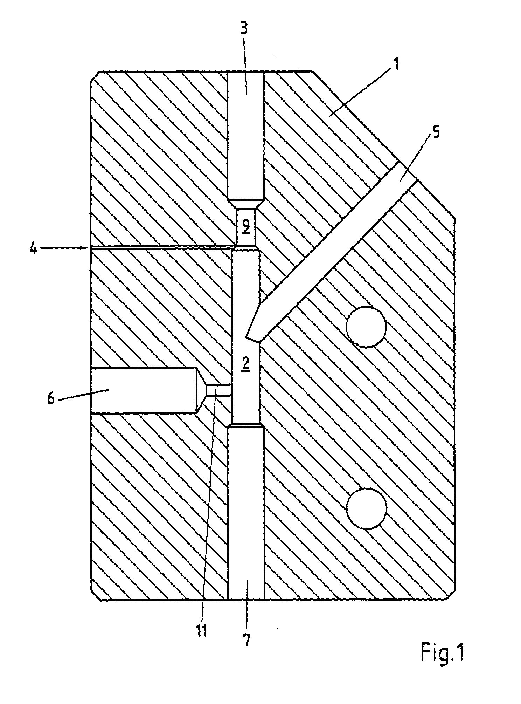

Das einstückig ausgebildete Mischelement 1 gemäss Fig. 1 weist nebst einem geradlinig verlaufenden Hauptkanal 2, einen ersten Dampfeinlasskanal 3, einen Lufteinlasskanal 4, einen zweiten Dampfeinlasskanal 5, einen Milcheinlasskanal 6 sowie einen Auslasskanal 7 auf. Zwischen dem ersten Dampfeinlasskanal 3 und dem Hauptkanal 2 ist eine Einschnürung 9 zur Bildung einer Unterdruckzone vorgesehen, wobei der erste Dampfeinlasskanal 3 endseitig in diese Einschnürung 9 übergeht. Der Lufteinlasskanal 4 mündet am stromabwärtsseitigen Ende radial in die Einschnürung 9, so dass durch den beim Durchströmen des Dampfes in der Einschnürung 9 bewirkten Venturieffekt Luft über den Lufteinlasskanal 4 angesaugt wird. Der Milcheinlasskanal 6 mündet am stromabwärtsseitigen Ende in den Hauptkanal 2, wobei der Milcheinlasskanal 6 im Mündungsbereich zum Hauptkanal 2 einen reduzierten Querschnitt aufweist, indem eine im Durchmesser reduzierte Bohrung 11 vorgesehen ist. Diese Bohrung 11 erlaubt es, die dem Hauptkanal 2 pro Zeiteinheit zuzuführende Milchmenge sehr genau zu dosieren. Der zweite Dampfeinlasskanal 5 mündet zwischen der Einschnürung 9 und dem Milcheinlasskanal 6 in Strömungsrichtung schräg in den Hauptkanal 2. Der Hauptkanal 2 mündet an seinem stromabwärtsseitigen Ende axial in den im Durchmesser vergrösserten Auslasskanal 7, welcher auf der Unterseite aus dem Mischelement 1 führt.

Ein derart ausgestaltes Mischelement 1 kann sehr einfach hergestellt werden, indem beispielsweise sämtliche der vorgängig genannten Kanäle durch Bohren hergestellt werden. Bohren hat u.a. den Vorteil, dass die entsprechenden Kanäle mit engen Toleranzen gefertigt werden können. Zudem ist aus der Darstellung gemäss Figur 1 sehr schön ersichtlich, dass das Mischelement 1 ausschliesslich geradlinig verlaufenden Kanäle aufweist, und dass Tot- und Stauräume, wie sie bisher üblich bzw. notwendig waren, bewusst vermieden wurden, so dass das Mischelement 1 insbesondere auch in hygienischer Hinsicht grosse Verteile bietet.

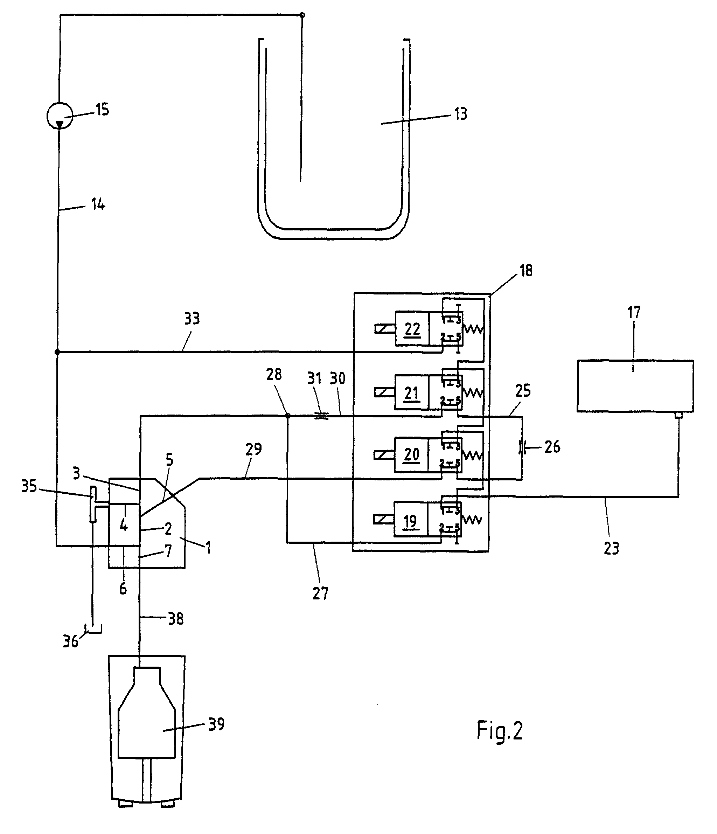

Anhand der Figur 2, welche eine schematische Darstellung der gesamten Anordnung zur Erzeugung von Milchschaum und zum Erhitzen von Milch zeigt, soll der Aufbau und die Wirkungsweise des Mischelements 1 zusammen mit den übrigen Bestandteilen der Anordnung näher erläutert werden. Die gezeigte Anordnung bildet im vorliegenden Fall einen Teil einer Espressokaffeemaschine, wobei auf die Darstellung der für das Zubereiten des Kaffeegetränks notwendigen Elemente verzichtet wurde.

Die Anordnung weist nebst dem Mischelement 1 einen Milchvorratsbehälter 13 auf, der über eine Michzufuhrleitung 14 mit dem Milcheinlasskanal 6 des Mischelements 1 verbunden ist. In der Leitung 14 ist eine Pumpe 15 zum zwangsweisen Fördern der Milch angeordnet. Im weiteren ist ein Dampferzeuger 17 vorgesehen, der über eine Ventileinrichtung 18 mit dem Mischelement 1 verbunden ist. Die Ventileinrichtung 18 weist insgesamt vier Ventile 19, 20, 21, 22 auf. Vom Dampferzeuger 17 führt eine Dampfhauptleitung 23 zu dem untersten Ventil 19. Die vier Ventile 19, 20, 21, 22 sind derart miteinander verbunden, dass die Eingänge sämtlicher vier Ventile 19, 20, 21, 22 mit dem Dampferzeuger 17 in Verbindung stehen. Die Auslässe des zweiten und dritten Ventils 20, 21 sind über eine mit einem Drosselventil 26 versehene Leitung 25 miteinander verbunden.

Vom Auslass des ersten Ventils 19 führt eine erste Leitung 27 über einen Knotenpunkt 28 zum ersten Dampfeinlasskanal 3 des Mischelements 1. Der Auslass des zweiten Ventils 20 ist über ein zweite Leitung 29 mit dem zweiten Dampfeinlasskanal 5 verbunden. Vom Auslass des dritten Ventils 21 führt ein dritte Leitung 30 zum genannten Knotenpunkt 28, so dass auch der Auslass des dritten Ventils 21 mit dem ersten Dampfeinlasskanal 3 des Mischelements 1 verbunden ist. In dieser dritten Leitung 30 ist ein weiteres Drosselventil 31 angeordnet. Der Auslass des vierten Ventils 22 ist über eine vierte Leitung 33 mit der Milchzufuhrleitung 14 verbunden. Am Eingang des Lufteinlasskanals 4 ist ein T-förmiges Verteilstück 35 angeordnet. Auf der Unterseite dieses Verteilstücks 35 ist eine Auffangschale 36 vorgesehen. Der Auslasskanal 7 des Mischelements 1 ist schliesslich über eine Leitung 38 mit einem Verteilelement 39 verbunden, das zwei Auslässe besitzt. Dieses Verteilelement stellt den Auslass der Kaffeemaschine (nicht dargestellt) dar, über weiches auch der zubereitete Kaffee ausströmen kann. Unter diesem Verteilelement 39 wird der zur Aufnahme des herzustellenden Getränks vorgesehene Getränkebehälter -Kaffeetasseplatziert. Es versteht sich, dass auch zwei Getränkebehälter gleichzeitig unter das Verteilelement gestellt werden können. Sollte das Verteilelement ggf. drei oder noch mehr Auslässe besitzen, so kann natürlich eine dementsprechende Anzahl Getränkebehälter gleichzeitig unter dem Verteilelement platziert werden.

Unter Bezugnahme auf die Figuren 1 und 2 wird nachfolgend die Wirkungsweise der Anordnung näher erläutert.

### 1. Milch aufschäumen.

Zum Aufschäumen von Milch wird die Pumpe 15 aktiviert und das erste Ventil 19 geöffnet. Durch das Aktivieren der Pumpe 15 wird über die Milchzufuhrleitung 14 und den Milcheinlasskanal 6 Milch in den Hauptkanal 2 des Mischelements 1 gefördert, während durch das Öffnen des ersten Ventils 19 die Leitung 23 mit der Leitung 27 verbunden wird, wodurch der vom Dampferzeuger 17 erzeugte Dampf über den ersten Dampfeinlasskanal 3 in das Mischelement 1 einströmen kann. Die zwangsweise geförderte Milch trifft beim Einströmen in den Hauptkanal 2 auf den durchströmenden Dampf, welcher beim vorgängigen Passieren der durch die Einschnürung 9 gebildeten Unterdruckzone bereits mit Luft versetzt wurde, da durch den beim Durchströmen des Dampfes in der Einschnürung 9 bewirkten Venturieffekt Luft über den Lufteinlasskanal 4 angesaugt wird. Die radial und mit Überdruck in den Hauptkanal 2 einströmende Milch vermischt sich dabei sofort mit dem durchströmenden und mit Luft versetzten Dampf, so dass ein heisses Gemisch aus Luft, Dampf, kondensiertem Wasser und Milch entsteht. Dieses Gemisch kann im nachfolgenden, im Durchmesser vergrösserten Auslasskanal 7 expandieren und zu einem homogenen, feinporigen Milchschaum emulgieren. Über das Verteilelement 39 kann dieser Milchschaum aus der Anordnung austreten und in einen bereitgestellten Getränkebehälter wie beispielsweise eine Kaffeetasse (nicht dargestellt) einströmen.

Unmittelbar an das Aufschäumen der Milch werden die Ein- und Auslasskanäle mittels Dampf gereinigt. Nach dem Abstellen der Pumpe 15 werden dazu das dritte und das vierte Ventil 21, 22 geöffnet. Dadurch werden die Kanäle 2, 3, 5, 6, 7 im Mischelement mit Dampf beaufschlagt und von ggf. vorhandenen Milchrückständen befreit. Durch die beiden Drosselventile 26, 31 sowie die im Durchmesser reduzierte Bohrung 11 des Milcheinlasskanals 6 wird der Dampfdruck soweit reduziert, dass bei diesem sich unmittelbar an den Aufschäumvorgang anschliessenden Reinigungsvorgang kein eigentlicher Dampfstoss aus dem Verteilelement 39 austritt. Das Verhindern eines Dampfstosses ist insofern von Bedeutung, da ein Dampfstoss den Benutzer erschrecken und das bereits zubereitete Getränk über den Getränkebehälter überschwappen lassen kann.

### 2. Milch erhitzen

Zum Erhitzen von Milch wird die Pumpe 15 aktiviert und das erste und zweite Ventil 19, 20 geöffnet. Durch das Öffnen der beiden Ventile 19, 20 wird über beide Dampfeinlasskanäle 3, 5 Dampf in den Hauptkanal 2 des Mischelements 1 geleitet. Über den zweiten Dampfeinlasskanal 5 wird dabei eine wesentlich grössere Menge an Dampf eingeleitet als über den ersten Dampfeinlasskanal 3, da der erste Dampfeinlasskanal 3 eine Querschnittsverengung in Form der Einschnürung 9 aufweist. Dadurch wird natürlich auch die Geschwindigkeit des durch die Einschnürung 9 strömenden Dampfs nachhaltig reduziert, so dass in der Einschnürung 9 kaum mehr ein nennenswerter Unterdruck erzeugt und damit auch kaum mehr Luft über den Lufteinlasskanal 4 angesaugt wird. Mit der über die beiden Dampfeinlasskanäle 3, 5 in den Hauptkanal 2 eingeleiteten Dampfmenge wird die in den Hauptkanal 2 einströmende Milch erhitzt, ohne dass sie dabei aufgeschäumt wird. Je nach Auslegung der gezeigten Anordnung wird die Milch auf ca. 65°C bis 80°C erhitzt.

Soll beispielsweise die Milch nur auf ca. 50°C bis 65°C erhitzt werden, kann es genügen, wenn nur über den zweiten Dampfeinlasskanal 5 Dampf zugeführt wird. In diesem Fall wird nur das Ventil 20 geöffnet. Natürlich sind auch Zwischenvarianten möglich, indem dem Mischelement 1 nur zeitweise über beide Dampfeinlasskanäle 3, 5 Dampf zugeführt wird. Durch eine selektive Ansteuerung des ersten und/oder zweiten Ventils 19, 20 kann somit gezielt Einfluss auf die Endtemperatur Milch genommen werden. Ausserdem kann die Milch gezielt "aufgeschäumt" werden, indem dem Mischelement 1, zumindest zeitweise, nur über den ersten Dampfeinlasskanal 3 Dampf zugeführt wird. Es versteht sich, dass durch die Gestaltung und/oder Dimensionierung der genannten Komponeten zudem gezielt Einfluss auf die in Bezug auf das Erhitzen bzw. Aufschäumen der Milch relevanten Parameter genommen werden kann.

Nach dem Erhitzen der gewünschten Milchmenge werden die Leitungen wiederum in der vorgängig beschriebenen Art mittels Dampf gereinigt.

Mit der gezeigten Anordnung kann natürlich auch kalte Milch in einen Getränkebehälter gefördert werden. In diesem Fall dient die Anordnung insbesondere dazu, die Leitungen nach dem Zuführen der Milch mittels Dampf zu reinigen.

Unter dem Begriff Hauptkanal ist im vorliegenden Fall nicht zwingend ein Kanal im herkömmlichen Sinne zu verstehen, sondern es kann darunter natürlich ebenso eine Kammer, wie sie beispielsweise bei den nach dem Stand der Technik ausgebildeten Emulgiereinrichtungen vorgesehen ist, verstanden werden. Wichtig ist in diesem Zusammenhang lediglich, dass ein wie auch immer gestalteter Hohlraum vorgesehen ist, in dem sich der Dampf, die Luft und die Milch derart vermischen können, dass in der Folge daraus eine homogene Emulsion entstehen kann. In diesem Sinne ist auch die Bezeichnung der übrigen Kanäle zu verstehen, welche nicht zwingend als Kanäle im eigentlichen Sinne des Wortes ausgebildet sein müssen. In vielen Fällen kann es genügen, für die Luftzufuhr eine wie auch immer geartete Öffnung vorzusehen, über welche direkt oder indirekt Luft in die Einschnürung eingesaugt werden kann.

Im Gegensatz zu herkömmlichen Emulgiereinrichtungen, bei denen auch die Milch durch den durch den Dampfstrom bewirkten Venturieffekt angesaugt wird, hat das zwangsweise Fördern der Milch den Vorteil, dass pro Zeiteinheit praktisch eine beliebig grosse Milchmenge gefördert und diese zudem genauer zudosiert werden kann.

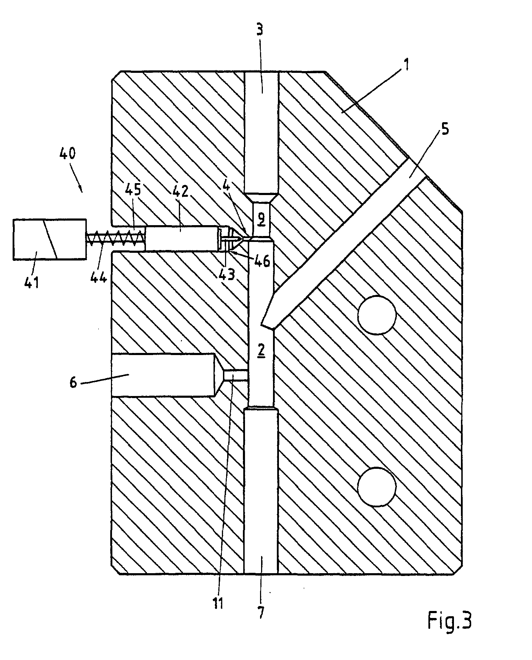

Fig. 3 zeigt einen Querschnitt durch ein alternatives Ausführungsbeispiel eines Mischelements. Gegenüber dem in Fig. 1 gezeigten Ausführungsbeispiel ist das hier dargestellte Mischelement zusätzlich mit einer Einrichtung 40 zum wahlweisen Verschliessen oder Öffnen des Lufteinlasskanals 4 versehen. Diese Einrichtung 40 weist einen Elektromagneten 41 auf, der mit einem in einer Bohrung 45 verschiebbar aufgenommenen Kolben 42 verbunden ist. An der Vorderseite des Kolbens 42 ist ein Schliesselement 43 angeordnet, mittels welchem der Lufteinlasskanal 4 verschlossen werden kann. Zwischen dem Elektromagneten 41 und dem Kolben 42 ist eine Druckfeder 44 aufgenommen, welche den Kolben 42 in Richtung des Einschnürung 9 zu drücken bestimmt ist, so dass das Schliesselement 43 den Lufteinlasskanal 4 in der Ruhestellung verschliesst. Die Bohrung 45 ist auf der dem Lufteinlasskanal 4 zugewandten Seite mit einem als Anschlag wirkenden Absatz 46 versehen, an dem sich der Kolben 42 mit seiner ringförmigen Stirnfläche anlegen kann. Der Anschlag kann natürlich auf der Seite des Elektromagneten 41 realisiert werden. Ein Aktivieren des Elektromagneten 41 bewirkt, dass der Kolben 42 nach hinten in die hier dargestellte Position gezogen wird, in der der Lufteinlasskanal 4 geöffnet ist. Über eine nicht näher dargestellte Bohrung, welche in den Raum auf der Vorderseite des Kolbens 42 führt, kann ggf. Luft angesaugt werden.

Durch die gezeigte Einrichtung 40 zum Verschliessen des Lufteinlasskanals 4 kann sichergestellt werden, dass der Lufteinlasskanal 4 bei Bedarf, beispielsweise beim Durchlaufen von kalter Milch, verschlossen ist und nicht in unerwünschter Weise mit Milch beaufschlagt wird. Dadurch kann die Gefahr eliminiert werden, dass der Lufteinlasskanal 4 durch sich ggf. darin angesammelte Milch, welche nach einer gewissen Zeit "sauer" wird, verstopft. Zudem wird mit jedem Betätigen des Elektromagneten 41 der Lufteinlasskanal 4 durch das Schliesselement 43 mechanisch gereinigt und von ggf. darin aufgenommenen Rückständen befreit. Im geschlossenen Zustand ragt das Schliesselement 43 vorzugsweise etwas aus dem Lufteinlasskanal 4 hervor, so dass letzterer vom Schliesselement 43 vollständig ausgefüllt ist und unerwünschte Stoffe nicht in nennenswerter Weise in den Lufteinlasskanal 4 gelangen können.

Die Vorteile der erfindungsgemässen Anordnung lassen sich wie folgt zusammenfassen:
- Es kann sowohl feinporiger Milchschaum wie auch heisse Milch produziert werden.
- Durch zwei Dampfeinlasskanäle kann die zum Erhitzen der Milch zur Verfügung stehende Dampfmenge erhöht bzw. gezielt beeinflusst werden.
- Die Endtemperatur der Milch kann beeinflusst werden.
- Es wird eine hohe Reproduzierbarkeit in Bezug auf die Endtemperatur der Milch erreicht.
- Das Mischelement ist kompakt aufgebaut und einfach herzustellen.
- Das Mischelement weist nur gerade Leitungsabschnitte und insbesondere keine Totund Stauräume auf. Daher ist es einfach zu reinigen.
- Zum Aufschäumen der Milch braucht keine Emulgierkammer vorgesehen zu werden.
- Das Mischelement braucht nicht unmittelbar vor dem Auslass angebracht zu werden, da der erzeugte Milchschaum ohne nennenswerten Qualitätsverlust auch über eine längere Strecke zu einem Auslass strömen kann.
- Die Anordnung eignet sich hervorragend für den Einbau in Espressokaffeemaschinen, insbesondere in vollautomatische Espressokaffeemaschinen, bei denen die Bezüge durch programmgesteuerte Funktionen erfolgen. Dadurch erhöht sich auch deren Flexibilität.
- Durch das zwangsweise Fördern der Milch kann pro Zeiteinheit ggf. eine beliebig grosse Milchmenge gefördert und diese genauer zudosiert werden.

## Patentansprüche

1. Anordnung zur Erzeugung von Milchschaum und zum Erhitzen von Milch, mit einem Dampferzeuger (17), einem Milchgefäss (13) und einem Mischelement (1), welch letzteres einen ersten Dampfeinlasskanal (3), eine stromabwärts davon angeordnete Einschnürung (9), einen in die Einschnürung (9) mündenden Lufteinlasskanal (4) sowie einen Milcheinlasskanal (6) aufweist, **dadurch gekennzeichnet, dass** das Mischelement (1) einen Hauptkanal (2) aufweist, der einlassseitig mit der Einschnürung (9) und stromabwärts davon mit dem Milcheinlasskanal (6) verbunden ist, und dass zwischen der Einschnürung (9) und dem Milcheinlasskanal (6) ein zweiter Dampfeinlasskanal (5) in den Hauptkanal (2) mündet.

2. Anordnung nach Anspruch 1, **dadurch gekennzeichnet, dass** Mittel (15) zum zwangsweisen Zuführen der Milch in das Mischelement (1) vorgesehen sind.

3. Anordnung nach Anspruch 1 oder 2, **dadurch gekennzeichnet, dass** das Mischelement (1) mit einem stromabwärts nach dem Hauptkanal (2) angeordneten im Durchmesser vergrösserten Auslasskanal (7) versehen ist.

4. Anordnung nach einem der vorhergehenden Ansprüche, **dadurch gekennzeichnet, dass** der zweite Dampfeinlasskanal (5) in Strömungsrichtung schräg in den Hauptkanal (2) mündet.

5. Anordnung nach einem der vorhergehenden Ansprüche, **dadurch gekennzeichnet, dass** der erste Dampfeinlasskanal (3) im wesentlichen axial und der Lufteinlasskanal (4) im wesentlichen radial in die Einschnürung (9) münden.

6. Anordnung nach einem der vorhergehenden Ansprüche, **dadurch gekennzeichnet, dass** der Milcheinlasskanal (6) im wesentlichen radial in den Hauptkanal (2) mündet.

7. Anordnung nach einem der vorhergehenden Ansprüche, **dadurch gekennzeichnet, dass** der Dampferzeuger (17) über eine Ventileinrichtung (18) derart mit dem Mischelement (1) verbunden ist, dass wahlweise der erste und/oder der zweite Dampfeinlasskanal (3, 5) mit Dampf beaufschlagbar ist.

8. Anordnung nach Anspruch 7, **dadurch gekennzeichnet, dass** über die Ventileinrichtung (18) zusätzlich auch der Milcheinlasskanal (6) mit Dampf beaufschlagbar ist.

9. Anordnung nach Anspruch 7 oder 8, **dadurch gekennzeichnet, dass** die Ventileinrichtung (18) zumindest drei separat ansteuerbare Ventile (19, 20, 21, 22) umfasst.

10. Anordnung nach einem der vorhergehenden Ansprüche, **dadurch gekennzeichnet, dass** sämtliche Kanäle (2, 3, 4, 5, 6, 7) des Mischelements (1) geradlinig verlaufen.

11. Anordnung nach einem der vorhergehenden Ansprüche, **dadurch gekennzeichnet, dass** der Hauptkanal (2) des Mischelements (1) als Bohrung ausgebildet ist.

12. Anordnung nach einem der vorhergehenden Ansprüche, **dadurch gekennzeichnet, dass** sämtliche Kanäle (2, 3, 4, 5, 6, 7) des Mischelements (1) als Bohrungen ausgebildet sind.

13. Anordnung nach einem der vorhergehenden Ansprüche, **dadurch gekennzeichnet, dass** der Milcheinlasskanal (6) im Mündungsbereich zum Hauptkanal (2) einen reduzierten Querschnitt aufweist.

14. Anordnung nach einem der vorhergehenden Ansprüche, **dadurch gekennzeichnet, dass** das Mischelement (1) einstückig ausgebildet ist.

15. Anordnung nach einem der vorhergehenden Ansprüche, **dadurch gekennzeichnet, dass** eine Einrichtung (40) zum wahlweisen Verschliessen oder Öffnen des Lufteinlasskanals (4) vorgesehen ist.

16. Espressokaffeemaschine, **dadurch gekennzeichnet, dass** sie mit einer nach einem der vorhergehenden Ansprüche ausgebildeten Anordnung versehen ist.

17. Verfahren zum Erzeugen von Milchschaum und/oder zum Erhitzen von Milch, mit einer gemäss einem der Ansprüche 1 bis 15 ausgebildeten Anordnung, **dadurch gekennzeichnet, dass** dem Mischelement (1) über den ersten und/oder zweiten Dampfeinlass (3, 5) selektiv Dampf zugeführt wird.

## Claims

1. Arrangement for generating milk-froth and for heating milk, having a steam generator (17), a milk vessel (13) and a mixing element (1), the latter having a first steam inlet duct (3), a constriction (9) arranged downstream of said duct, an air inlet duct (4) leading into the constriction (9) and a milk inlet duct (6), **characterized in that** the mixing element (1) has a main duct (2) which is connected on the inlet side to the constriction (9) and downstream thereof is connected to the milk inlet duct (6), and **in that** between the constriction (9) and the milk inlet duct (6) a second steam inlet duct (5) leads into the main duct (2).

2. Arrangement according to Claim 1, **characterized in that** means (15) for forcibly feeding the milk into the mixing element (1) are provided.

3. Arrangement according to Claim 1 or 2, **characterized in that** the mixing element (1) is provided with an outlet duct (7) which is arranged downstream of the main duct (2) and is enlarged in diameter.

4. Arrangement according to one of the preceding claims, **characterized in that** the second steam inlet duct (5) leads in the direction of flow obliquely into the main duct (2).

5. Arrangement according to one of the preceding claims, **characterized in that** the first steam inlet duct (3) leads essentially axially and the air inlet duct (4) leads essentially radially into the constriction (9).

6. Arrangement according to one of the preceding claims, **characterized in that** the milk inlet duct (6) leads essentially radially into the main duct (2).

7. Arrangement according to one of the preceding claims, **characterized in that** the steam generator (17) is connected to the mixing element (1) via a valve device (18) in such a manner that either the first and/or the second steam inlet duct (3, 5) can be charged with steam.

8. Arrangement according to Claim 7, **characterized in that** the valve device (18) can additionally also be used to charge the milk inlet duct (6) with steam.

9. Arrangement according to Claim 7 or 8, **characterized in that** the valve device (18) comprises at least three valves (19, 20, 21, 22) which can be activated separately.

10. Arrangement according to one of the preceding claims, **characterized in that** all of the ducts (2, 3, 4, 5, 6, 7) of the mixing element (1) run rectilinearly.

11. Arrangement according to one of the preceding claims, **characterized in that** the main duct (2) of the mixing element (1) is designed as a bore.

12. Arrangement according to one of the preceding claims, **characterized in that** all of the ducts (2, 3, 4, 5, 6, 7) of the mixing element (1) are designed as bores.

13. Arrangement according to one of the preceding claims, **characterized in that** the milk inlet duct (6) has a reduced cross section in the region leading to the main duct (2).

14. Arrangement according to one of the preceding claims, **characterized in that** the mixing element (1) is of single-piece design.

15. Arrangement according to one of the preceding claims, **characterized in that** a device (40) for either closing or opening the air inlet duct (4) is provided.

16. Espresso coffee machine, **characterized in that** it is provided with an arrangement designed according to one of the preceding claims.

17. Method for generating milk-froth and/or for heating milk, with an arrangement designed according to one of Claims 1 to 15, **characterized in that** steam is selectively supplied to the mixing element (1) via the first and/or second steam inlet (3, 5).

## Revendications

1. Dispositif de moussage du lait et de chauffage du lait, comprenant un générateur de vapeur (17), un réservoir de lait (13) et un élément mélangeur (1), ce dernier comprenant un premier canal d'admission de la vapeur (3), un rétrécissement (9) agencé en aval de celui-ci, un canal d'admission de l'air (4) débouchant dans le rétrécissement (9), ainsi qu'un canal d'admission du lait (6), **caractérisé en ce que** l'élément mélangeur (1) comporte un canal principal (2), dont le côté d'entrée est relié au rétrécissement (9) et qui est relié, en aval de ce dernier, avec le canal d'admission du lait (6), et **en ce qu'**un deuxième canal d'admission de la vapeur (5) débouche dans le canal principal (2) entre le rétrécissement (9) et le canal d'admission du lait (6).

2. Dispositif selon la revendication 1, **caractérisé en ce qu'**il est prévu des moyens (15) pour le guidage forcé du lait dans l'élément mélangeur (1).

3. Dispositif selon la revendication 1 ou 2, **caractérisé en ce que** l'élément mélangeur (1) est muni d'un canal de sortie (7) à diamètre agrandi, agencé en aval du canal principal (2).

4. Dispositif selon l'une quelconque des revendications précédentes, **caractérisé en ce que** le deuxième canal d'admission de la vapeur (5) débouche dans le canal principal (2) en oblique par référence au sens du flux.

5. Dispositif selon l'une quelconque des revendications précédentes, **caractérisé en ce que** le premier canal d'admission de la vapeur (3) débouche sensiblement dans le sens axial dans le rétrécissement (9) et le canal d'admission de l'air (4) débouche sensiblement dans le sens radial dans ledit rétrécissement (9).

6. Dispositif selon l'une quelconque des revendications précédentes, **caractérisé en ce que** le canal d'admission du lait (6) débouche sensiblement dans le sens radial dans le canal principal (2).

7. Dispositif selon l'une quelconque des revendications précédentes, **caractérisé en ce que** le générateur de vapeur (17) est relié à l'élément mélangeur (1) par l'intermédiaire d'un système de soupapes (18), de telle sorte que la vapeur peut être guidée au choix dans le premier et/ou le deuxième canal d'admission de la vapeur (3, 5).

8. Dispositif selon la revendication 7, **caractérisé en ce que**, en plus, la vapeur peut aussi être guidée par l'intermédiaire du système de soupapes (18) dans le canal d'admission du lait (6).

9. Dispositif selon la revendication 7 ou 8, **caractérisé en ce que** le système de soupapes (18) comprend au moins trois soupapes (19, 20, 21, 22) pouvant être commandées séparément.

10. Dispositif selon l'une quelconque des revendications précédentes, **caractérisé en ce que** tous les canaux (2, 3, 4, 5, 6, 7) de l'élément mélangeur (1) sont rectilignes.

11. Dispositif selon l'une quelconque des revendications précédentes, **caractérisé en ce que** le canal principal (2) de l'élément mélangeur (1) est conçu sous forme de forure.

12. Dispositif selon l'une quelconque des revendications précédentes, **caractérisé en ce que** tous les canaux (2, 3, 4, 5, 6, 7) de l'élément mélangeur (1) sont conçus sous forme de forures.

13. Dispositif selon l'une quelconque des revendications précédentes, **caractérisé en ce que** le canal d'admission du lait (6) a une plus petite section dans la zone d'embouchure dans le canal principal (2).

14. Dispositif selon l'une quelconque des revendications précédentes, **caractérisé en ce que** l'élément mélangeur (1) est réalisé en une seule pièce.

15. Dispositif selon l'une quelconque des revendications précédentes, **caractérisé en ce qu'**il est prévu une unité (40) pour, au choix, ouvrir ou fermer le canal d'admission de l'air (4).

16. Machine expresso, **caractérisée en ce qu'**elle est munie d'un dispositif conçu selon l'une quelconque des revendications précédentes.

17. Procédé de moussage du lait et/ou de chauffage du lait, avec un dispositif conçu selon l'une quelconque des revendications 1 à 15, **caractérisé en ce que** la vapeur est acheminée de manière sélective vers l'élément mélangeur (1) par l'intermédiaire du premier et/ou du deuxième canal d'admission de la vapeur (3, 5).
